# EUROPEAN PATENT SPECIFICATION

(11) **EP 2 514 993 B1**
(45) Date of publication and mention of the grant of the patent: **14.05.2014**
(21) Application number: 12164602.0
(22) Date of filing: 18.04.2012
(51) Int. Cl.: F16F 15/26, F16D 7/08, F16D 43/206

(54) **Coupling device**
Kupplungsvorrichtung
Dispositif de couplage

(30) Priority: 22.04.2011 JP 2011095793
(43) Date of publication of application: 24.10.2012
(73) Proprietor: Honda Motor Co., Ltd., Tokyo 107-8556 (JP)
(72) Inventor: Nagata, Morimasa, Saitama, 351-0193 (JP); Hironaka, Masaki, Saitama, 351-0193 (JP)
(74) Representative: Feller, Frank

(56) References cited:
- EP-A2- 1 731 266
- FR-A1- 2 596 476
- JP-B2- 3 646 091
- JP-B2- 3 729 006
- US-A- 5 505 676

## Description

### BACKGROUND OF THE INVENTION

### Field of the Invention

The present invention relates to a coupling device for transmitting rotative power in vehicles and industrial machines, and in particular to a technology for reducing fluctuations in rotational speed in a power transmission mechanism.

### Description of Related Art

A coupling device according to the preamble of claim 1 is known from US 5,505,676 A, EP 1 731 266 A2 or FR 2 596 476 A1.

An automotive inline four cylinder engine is often incorporated with a balancer device for canceling a second order vibration of the engine. The balancer device includes a pair of eccentrically weighted balancer shafts supported in a balancer case and rotated at twice the rotational speed of the crankshaft in mutually opposite directions. The balancer case is usually attached to a lower part of the cylinder block inside the crankcase. See JP 3646091B and JP 3729006B, for instance.

In the balancer device disclosed in JP 3646091 B, the crankshaft and one of the balancer shafts are each fitted with a sprocket wheel so that the balancer shaft is actuated by the crankshaft via an endless chain passed around the sprockets. In the balancer device disclosed in JP 3729006B, the crankshaft and one of the balancer shafts are each fitted with a spur gear so that the balancer shaft is actuated by the crankshaft via the spur gears.

The use of an endless chain for power transmission is disadvantageous in terms of the noises and the durability. Also, the chain transmission mechanism requires tensioner so that the manufacturing cost is high and the assembly work tends to be complex. When a gear mechanism is used, the fluctuation in the rotational speed is directly transmitted to the balancer shafts so that various parts of the engine may be subjected to undesired vibrations.

### BRIEF SUMMARY OF THE INVENTION

In view of such problems of the prior art, a primary object of the present invention is to provide a coupling device that can prevent fluctuations in the rotational speed or the angular vibrations to be transmitted from the input end to the output end.

A second object of the present invention is to provide a coupling device with a vibration damping capability which is both compact and durable.

A third object of the present invention is to provide a coupling device which is suitable for use in an input end of an engine balancer device.

To achieve such objects, the present invention provides a coupling device, comprising a housing (21), a first rotatable member (41) rotatably supported by the housing around an axial line of rotation, a second rotatable member (42) rotatably supported by the housing in a coaxial relationship to the first rotatable member and a torsional resilient coupling mechanism interposed between the first and second rotatable members, **characterized in that**: the torsional resilient coupling mechanism includes an arcuate groove (51, 52) formed on a side of at least one of the first and second rotatable members facing the other of the first and second rotatable members, the arcuate groove including a sloped section (51a, 52a) having a bottom surface inclined circumferentially with respect to a plane perpendicular to the axial line of rotation; a rolling member (43) received in the arcuate groove and having a rolling diameter greater than a maximum depth of the arcuate groove; and a spring member (44) urging the first and second rotatable members toward each other.

Owing to the interaction between the rolling member and the sloped section under the axial biasing force of the spring member, a circumferential biasing torque T is created between the first and second rotatable members depending on the angular displacement or offset between the first and second rotatable members. By suitably configuring the depth of the groove along the circumferential length thereof, any desired torsional torque profile can be achieved in relation with the angular displacement or offset between the first and second rotatable members.

Further, the coupling device is configured to be provided in an input end of a balancer device including a pair of balancer shafts (23, 24) rotatably supported by a balancer housing (21) and synchronized so as to rotate in opposite direction at a same speed and the first rotatable member is configured to comprise a driven gear (25) of the balancer device meshing with a drive gear (15) for transmitting rotation of a crankshaft (11) of an internal combustion engine and rotatably supported by one of the balancer shafts (23), and the second rotatable member is configured to comprise a disk (42) supported by an extension (23c) of the one balancer shaft in an axially slidable and rotational fast manner.

According to a preferred embodiment of the present invention, the first rotatable member is rotatably supported by a shaft (23) which is in turn rotatably supported by the housing, and the second rotatable member is supported by an extension (23c) of the shaft in an axially slidable and rotational fast manner. Thereby, the coupling device can be constructed as a highly compact and simple structure. In this case, the spring member may be interposed between the second rotatable member and a spring retaining member (40) fixedly attached to the extension of the shaft.

Preferably, the first and second rotatable members are both provided with the arcuate groove on mutually opposing surfaces thereof, and the rolling member is provided with a rolling diameter (D) greater than a combined maximum depth (H1 + H2) of the arcuate grooves.

To the end of minimizing the risk of the rolling member from being dislodged from a slot defined by the two grooves, the groove of the first rotatable member may be deeper than that of the second rotatable member at least in parts (51a, 52a) thereof where the rolling member is located in a neutral point.

To achieve an optimum effect in minimizing transmission of torsional vibrations when the angular offset between the first and second rotatable members is relatively small, the groove may include a central flat section (51a, 52a) and a pair of sloped sections (51b, 51c, 52b, 52c) smoothly connected to either circumferential end of the central flat section. In this case, the damping effect can be accomplished by dry friction, viscous damping or other forms of damping that may be provided internally or externally of the coupling device.

Alternatively, the groove may include a central concave section (51a', 52a') and a pair of sloped sections (51b, 51c, 52b, 52c) smoothly connected to either circumferential end of the central concave section, the inclination angle of the concave section progressively increasing from a central part thereof to a point of transition to each adjoining sloped section. In this case, a relatively weak torsional spring force is created when the angular offset between the first and second rotatable members is relatively small so that a finely tuned damping effect can be achieved by the weak torsional spring force, possibly in combination with dry friction, viscous damping or other forms of damping that may be provided internally or externally of the coupling device.

The maximum angular offset is produced when a driving torque is transmitted from the first member to the second member. Therefore, to limit the maximum angular offset between the first and second rotatable members without substantially compromising the vibration isolating performance of the coupling device, one of the sloped sections of each groove that engages the rolling member when transmitting a driving torque from the first member to the second member may be made steeper than the other.

To achieve any desired torsional spring force between the first and second rotatable members and increase the freedom in configuring the dynamic response of the coupling device, the sloped sections of the groove may be made asymmetric to each other.

### BRIEF DESCRIPTION OF THE SEVERAL VIEWS OF DRAWINGS

Figure 1 is a side view of an inline, four-cylinder engine incorporated with a coupling device embodying the present invention, partly in section;
Figure 2 is an enlarged sectional view of a balancer device incorporated in the engine taken along line II-II of Figure 1;
Figure 3 is an exploded perspective view of the coupling device and a first balancer shaft of the balancer device;
Figure 4 is an enlarged fragmentary sectional view of a part of the coupling device;

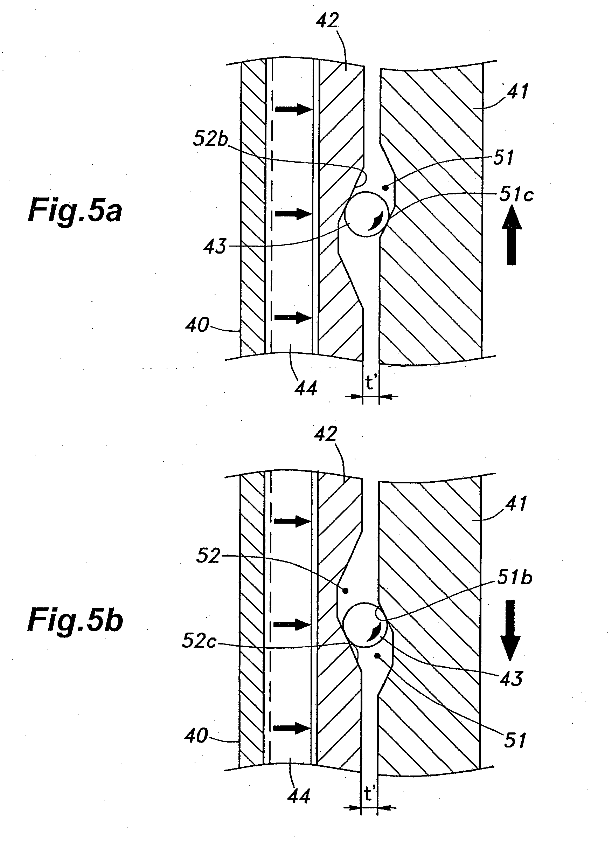

Figures 5a and 5b are views similar to Figure 4 showing the mode of operation of the coupling device;
Figure 6 is a graph showing a spring force of a dish spring in the coupling device in relation to the relative angular offset between an input end and an output end of the coupling device;
Figure 7 is a graph showing an operating torque of the coupling device in relation to the relative angular offset between the input end and the output end of the coupling device;
Figure 8 is a view similar to Figure 2 showing a second embodiment of the present invention; and
Figure 9 is a view similar to Figure 4 showing a modification of the first or the second embodiment of the present invention.

### DETAILED DESCRIPTION OF THE INVENTION

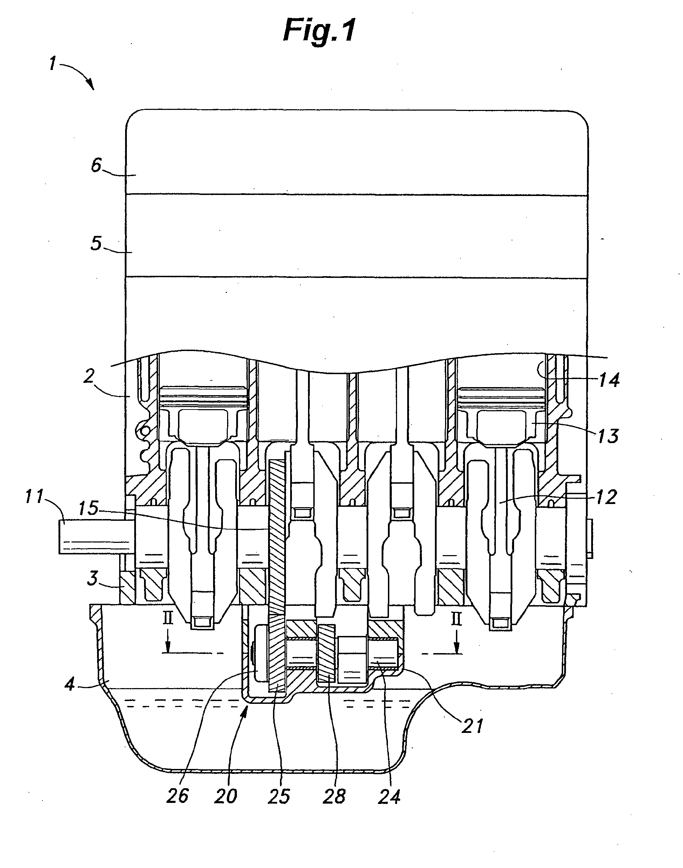

An automotive engine balancer embodying the present invention is described in the following with reference to the appended drawings. In the following description, the left hand side, the lower side and the side facing the viewer in Figure 1 are referred to as the "front", "lower" and "leftward" side of the engine and the associated components, respectively.

The internal combustion engine 1 shown in Figure 1 consists of a four-stroke, inline, four-cylinder diesel engine, and comprises a cylinder block 2, a lower block 3, an oil pan 4, a cylinder head 5 and a head cover 6. The cylinder block 2 and the lower block 3 jointly define bearings for rotatably supporting a crankshaft 11. During the operation of the engine 1, each of four pistons 13 connected to the crankshaft 11 via a connecting rod 12 reciprocates in a corresponding cylinder bore 14 defined in the cylinder block 2. A balancer device 20 is attached to a lower side of the lower block 3, and is configured to be driven by a drive gear (helical spur gear) 15 integrally attached to the crankshaft 11. The drive gear 15 may be formed by hobbing a blank prepared by forging or casting or by sintering, and press fitted onto the crankshaft 11.

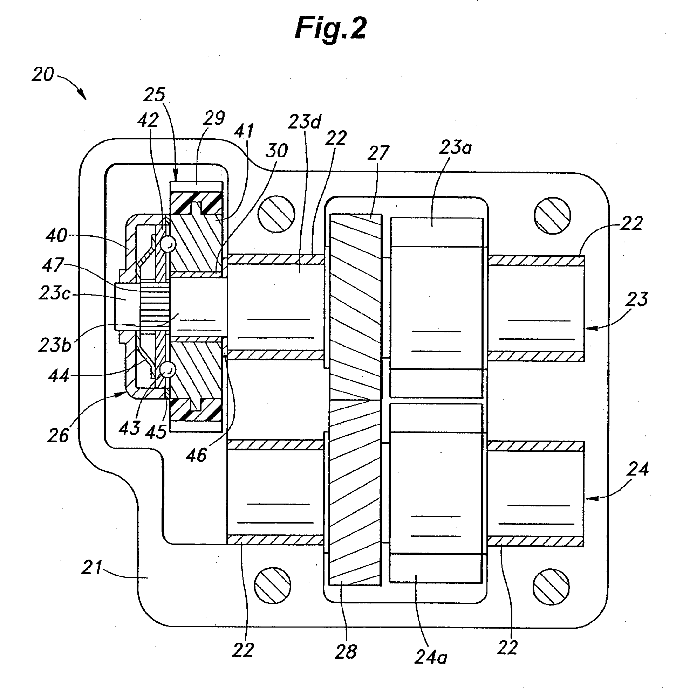

As shown in Figure 2, the balancer device 20 comprises a balancer case 21 and a pair of balancer shafts 23 and 24 (a first balancer shaft 23 and a second balancer shaft 24) disposed in a mutually parallel relationship and each rotatably supported within the balancer case 21. The first balancer shaft 23 includes a balancer weight 23 a, a first gear (helical spur gear) 27 adjoining the balancer weight 23a and a pair of journal portions 23d located on either axial side of the balancer weight 23a and the first gear 27. Similarly, the second balancer shaft 24 includes a balancer weight 24a, a second gear (helical spur gear) 28 adjoining the balancer weight 24a and a pair of journal portions 23d located on either axial side of the balancer weight 24a and the second gear 28. The first and second gears 27 and 28 mesh each other so that the two balancer shafts 23 and 24 rotate at the same speed in opposite directions. The angular positions of the balancer weights 23a and 24a on the first and second balancer shafts 23 and 24 are selected so as to cancel the secondary dynamic imbalance of the engine that causes an up-and-down vibration of the engine 1 at twice crankshaft speed. The journal portions 23d of the two balancer shafts 23 and 24 are rotatably supported by the balancer case 20 via respective plane bearings 22.

The first balancer shaft 23 is further provided with an intermediate diameter portion 23b coaxially extending from one of the journal portions 23d adjoining the first gear 27 and given with a smaller diameter than the journal portion 23d, and a reduced diameter portion 23c coaxially extending from the other end of the intermediate diameter portion 23b and given with a smaller diameter than the intermediate diameter portion 23b. The base end of the reduced diameter portion 23c adjoining the intermediate diameter portion 23b is provided with a splined section 47.

A driven gear 25 is rotatably supported on the intermediate diameter portion 23b via a plane bearing 30. The driven gear 25 consists of a disk-shaped steel gear base 41 and a plastic gear ring 29 integrally molded on the outer periphery of the gear base 41 and meshing with the drive gear 15. The steel gear base 41 is rotatably supported by the intermediate diameter portion 23b via the plane bearing 30. The plastic gear ring 29 may be prepared by impregnating aramid reinforcing fabric with polyamino-amid resin, curing the resin and hobbing or otherwise cutting teeth therein. By using the plastic driven gear 25, the meshing noise can be reduced. For the same reason, the first gear 27 is made of steel while the second gear 28 is made of plastic in the illustrated embodiment.

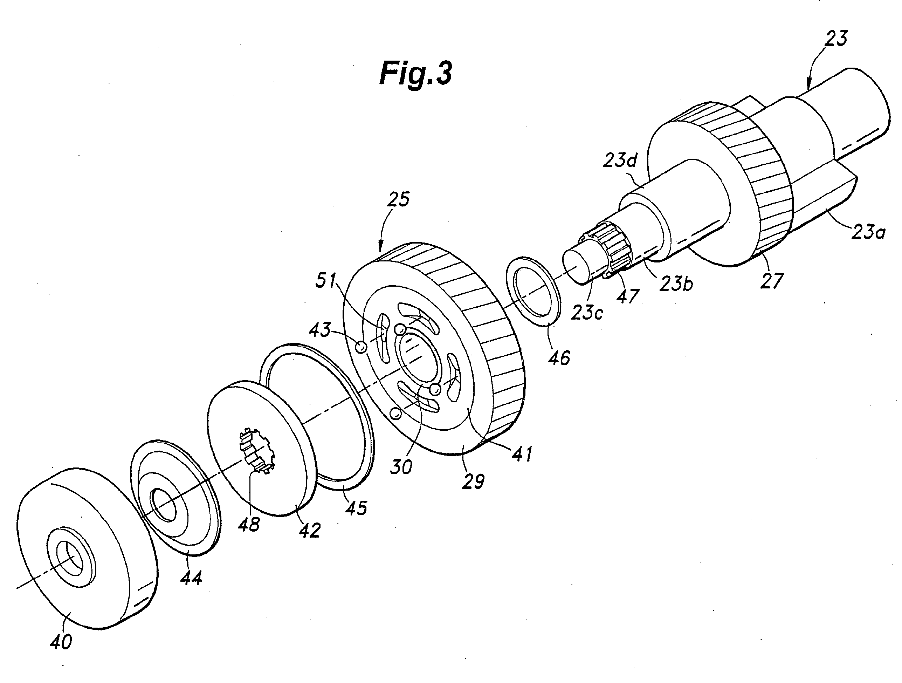

As shown in Figure 3 also, the driven gear 25 is connected to the first balancer shaft 23 via a coupling device 26. The coupling device 26 comprises a cup-shaped spring retaining member 40 press fitted on the small diameter portion 23c of the first balancer shaft 23 with an open end thereof facing inwardly, a disk 42 slidably fitted on the splined section 47 in the base end of the small diameter portion 23c. Owing to the engagement between the splined section 47 of the small diameter portion 23c and a corresponding splined bore 48 of the disk 42, the disk 42 is rotationally fast with the first balancer shaft 23 but axially moveable relative to the first balancer shaft 23.

The gear base 41 is provided with four identical arcuate grooves 51 located along a concentric circle at a regular angular interval on the side thereof facing the disk 42. The side of the disk 42 facing the gear base 41 is provided with four corresponding arcuate grooves 52. A steel ball 43 is received in an arcuate slot defined by each opposing pair of the grooves 51 and 52 of the gear base 41 and the disk 42. The gear base 41 engages the annular shoulder surface defined between the intermediate diameter portion 23b and the adjoining journal portion 23d of the first balancer shaft 23 via an annular thrust bearing 46. The annular axial end of the spring retaining member 40 abuts the opposing side surface of the gear base 41 via an annular thrust bearing 45. A dish spring 44 is interposed between the spring retaining member 40 and the disk 42 to urge resiliently the disk 42 toward the gear base 41.

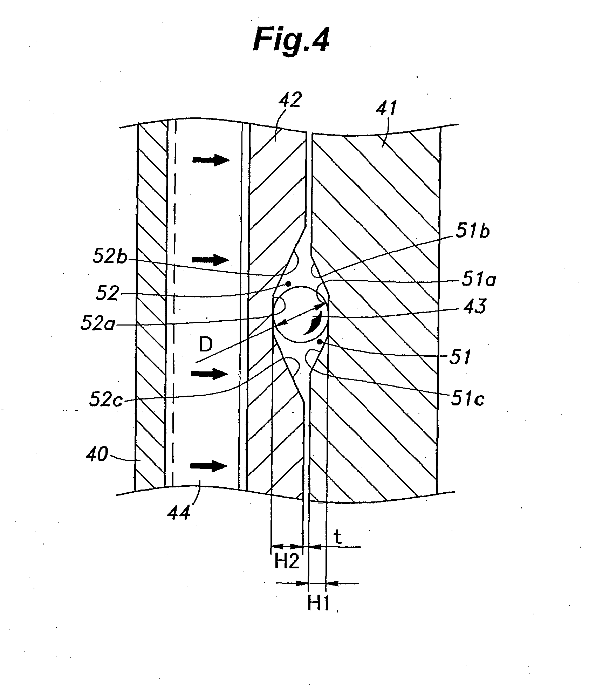

As shown in Figure 4, the groove 51 of the gear base 41 includes a central flat section 51a having a bottom surface substantially in parallel with the base surface of the gear base 41 and a pair of sloped sections 51b and 51c having a bottom surface connecting either end of the central flat section 51a to the adjacent base surface of the end surface of the gear base 41. Similarly, the groove 52 of the disk 42 includes a central flat section 52a having a bottom surface substantially in parallel with the base surface of the disk 42 and a pair of sloped sections 52band 52c having a bottom surface connecting either end of the central flat section 52a to the adjacent base surface of the end surface of the disk 42. In the illustrated embodiment, the central flat sections 51al a and 52a of the two grooves 51 and 52 have a same length, and the sloped sections 51b, 51cm 52b and 52c are inclined with respect to the corresponding central flat sections 51a and 52a by a same sloping angle. Therefore, each diagonally opposing pair of the sloped sections 5 1 b and 52c, 51c and 52b are parallel to each other. The grooves 51 and 52 are configured to allow a smooth rolling movement of the steel ball 43 therein.

The depth H1 of the central flat section 51a of the first groove 51 with respect to the base surface is smaller than the depth H2 of the central flat section 52a of the second groove 52 with respect to the base surface, and the sum of the depths of the two central flat sections 51a and 52a is smaller than the diameter D of the steel ball 43. Therefore, there is a gap of t (= D - H1 - H2) defined between the base surfaces of the gear base 41 and the disk 42 when the steel balls 43 are received in the central flat sections 51a and 52a. To the end of minimizing the risk of the steel ball 43 from being dislodged from the slot defined by the two grooves 51 and 52, the groove of one of the gear base 41 and the disk 42 may be deeper than that of the other at least in the central flat sections 51a and 52a thereof Preferably, one of the flat sections 51a and 52a may have a depth slightly greater than one half the diameter D of the steel ball 43. In particular, the groove 51 in the gear base 41 is preferably deeper than that of the groove 52 in the disk 42 because the gear base 41 is subjected to less angular vibratory movement than the disk 42, and the steel ball 43 can be retained in the slot defined by the two grooves 51 and 52 in a highly stable manner.

When the engine 1 is started, and the drive gear 15 rotates with the crankshaft 11, the driven gear 25 meshing with the drive gear 15 rotates at twice the rotational speed of the drive gear 15 or the crankshaft 11. The rotation of the driven gear 25 is transmitted to the disk 42 via the steel balls 43, and then to the first balancer shaft 23 via the spline coupling between the disk 42 and the first balancer shaft 23. Owing to the meshing between the first and second gears 27 and 28, the second balancer shaft 24 is rotated at the same speed as the first balancer shaft 23 in the opposite direction. The resulting rotation of the balancer weights 23a and 24a cancels the secondary vibration of the engine so that a relatively vibration free operation of the engine can be accomplished. Furthermore, because the driven gear 25 and the second gear 28 are made plastic material, the gear noises can be minimized.

When the engine 1 is in operation, some angular offset may be produced between the disk 42 and the gear base 41. For instance, when the engine 1 accelerates, the gear base 41 may angularly advance relative to the disk 42. Conversely, when the engine 1 decelerates, the disk 42 may angularly advance relative to the gear base 41. Depending on the magnitude of the acceleration or the deceleration of the engine, an angular offset is produced between the disk 42 and the gear base 41.

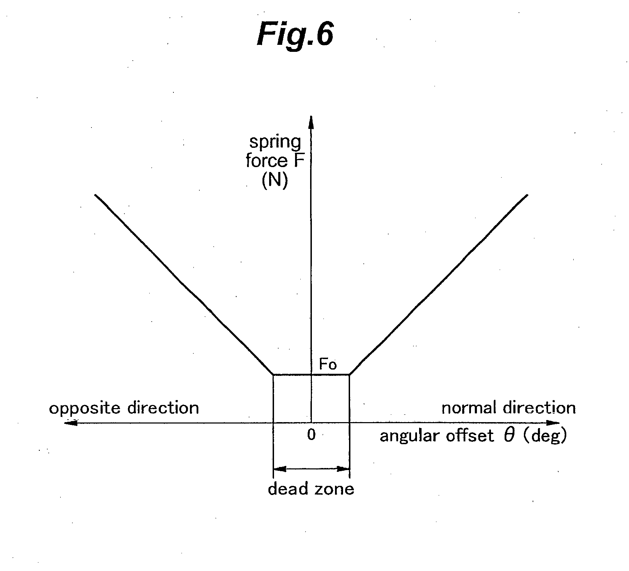

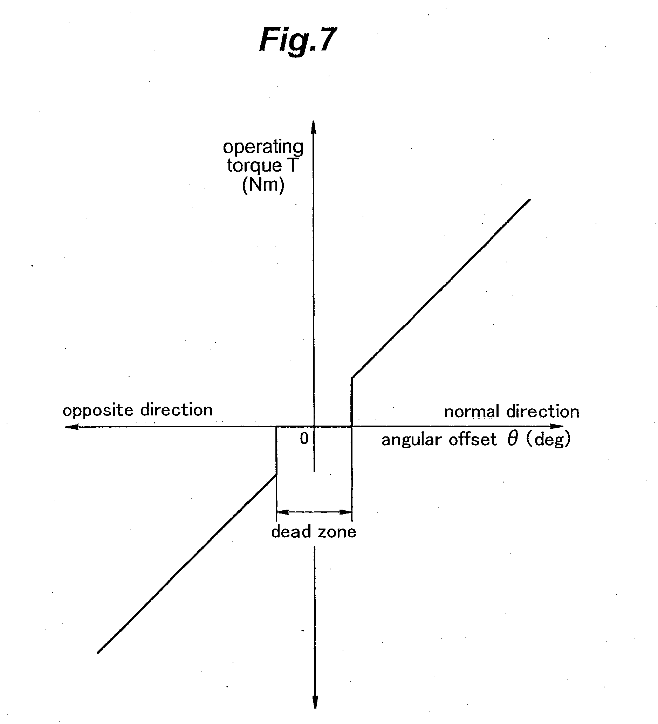

When the angular offset is within a certain range (corresponding to the length of the central flat sections 51a and 52a), each steel ball 43 is interposed between the two central flat sections 51a and 52a. In this condition, the coupling device 26 is essentially disengaged, and substantially no torque is transmitted between the disk 42 and the gear base 41. The dish spring 44 is pre-stressed (F0), and the disk 42 is urged onto the gear base 41 via the steel balls 43 with the pre-stress force F0. When the angular offset is greater than the prescribed value, each ball 43 rolls up the corresponding sloped sections 51b, 51c, 52b and 52c of the gear base 41 and the disk 42 (depending on the direction of the angular offset), and this increases the biasing force F of the dish spring 44 acting upon the disk 42 in proportion to the increase in the angular offset. This relationship is represented by the graph of Figure 6. This axial biasing force F creates a circumferential biasing torque T between the gear base 41 and the disk 42 owing to the interaction between each steel ball 43 and the sloped sections 51b, 51c, 52b and 52c of the gear base 41 and the disk 42. This relationship is represented by the graph of Figure 7.

Therefore, the gear base 41 and the disk 42 are coupled to each other in effect with a torsion spring that includes a certain dead zone. When the angular offset between the gear base 41 and the disk 42 is small, the gear base 41 and the disk 42 are connected by a torsion spring having an infinitely small spring constant. When the angular offset between the gear base 41 and the disk 42 is greater than the prescribed value, the gear base 41 and the disk 42 are connected by a torsion spring having a significant spring constant.

When the angular offset is small, the torsional resonant frequency of the system including the gear base 41 and the disk 42 is lowered or the torsional stiffness of the system is reduced. In this case, the damping effect can be accomplished by dry friction, viscous damping or other forms of damping that may be provided internally or externally of the coupling device. When the angular offset is large, the torsional resonant frequency of the system including the gear base 41 and the disk 42 is increased or the torsional stiffness of the system is increased. Thus, according to the illustrated embodiment, a highly soft coupling is achieved between the gear base 41 and the disk 42 when the angular offset is small, while an excessively angular offset between the gear base 41 and the disk 42 can be avoided when a relatively high torque is transmitted between the gear base 41 and the disk 42.

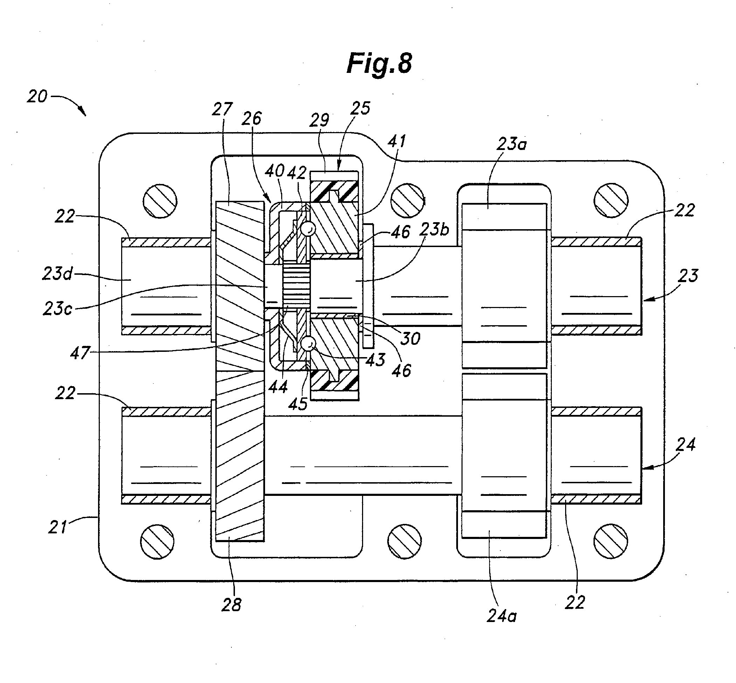

Figure 8 shows a second embodiment of the present invention. In Figure 8, the parts corresponding to those of the previous embodiment are denoted with like numerals, and such parts are omitted from the written description to avoid redundancy. In this embodiment, the driven gear 25 is located between the first gear 27 and the balancer weight 23a. In this case, the first balancer shaft 23 consists of two pieces which are integrally press fitted one into the other, with each piece fitted with the first gear 27 and the balancer weight 23a, respectively, and the combined first balancer shaft 23 is rotatably supported by the balancer case 21 at journal portions provided in axial end parts thereof. According to this embodiment, the driven gear 25 is located between the two journal portions, instead of a cantilever section of the first balancer shaft 23 as in the previous embodiment, so that the loading on the bearings for the first balancer shaft 23 may be reduced.

The configuration of the arcuate grooves 51 and 52 in the foregoing embodiment is only exemplary, and can be modified without departing from the spirit of the present invention. For instance, the length (angular range) of each flat section can be selected as desired, and the two grooves 51 and 52 may be provided with flat sections of unequal lengths. If desired, one of the flat sections or both of them may be omitted.

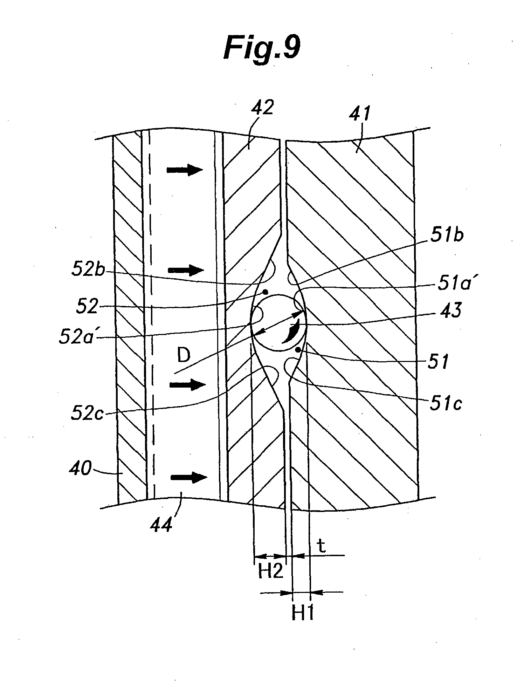

In a modified embodiment illustrated in Figure 9, each groove 51, 52 includes a central concave section 51a', 52a' and a pair of sloped sections 51b, 51c, 52b, 52c smoothly connected to either circumferential end of the central concave section 51a', 52a', the inclination angle of the concave section progressively increasing from a central part thereof to a point of transition to each adjoining sloped section. In this case, a relatively weak torsional spring force is created when the angular offset between the gear base 41 and the disk 42 is relatively small so that a finely tuned damping effect can be achieved by the weak torsional spring force, possibly in combination with dry friction, viscous damping or other forms of damping that may be provided internally or externally of the coupling device.

The sloped sections 51b, 51c, 52b and 52c of the two arcuate grooves 51 and 52 are not required to incline by a same angle, but may also incline by different angles. The depths of the two arcuate grooves may be selected as desired as long as the sum of the greatest depths of the two grooves is greater than the diameter of the steel balls. It is also possible to vary the inclination angle of each sloped section in discrete steps or in a continuous manner so that a desired non-linear property may be achieved.

The maximum angular offset is produced when a driving torque is transmitted from the driven gear 25 to the disk 42. Therefore, to limit the maximum angular offset between the driven gear 25 and the disk 42 without substantially compromising the vibration isolating performance of the coupling device, one of the sloped sections of each groove that engages the steel ball when transmitting a driving torque from the driven gear 25 to the disk 42 may be made steeper than the other.

To achieve any desired torsional spring force between the driven gear 25 and the disk 42 and increase the freedom in configuring the dynamic response of the coupling device, the sloped sections of each groove may be made asymmetric to each other.

When the length (angular range) of each flat section is increased, the resonant frequency may be lowered, but a relatively large angular offset may be produced. If the inclination angle of each sloped section is increased and/or the spring constant of the dish spring is increased, the resonant frequency may be raised, but the angular offset may be decreased.

According to the foregoing embodiment, the torsional stiffness of the coupling device can be configured freely by suitably changing the configurations of the arcuate grooves and the dish spring. Furthermore, the components of the coupling device may be all made of metallic material, instead of rubber or other polymer material, so that the coupling device can be designed as a highly durable unit. Steel balls were used in the foregoing embodiment, but may also consist of any other rolling members such as cylindrical, barrel-shaped or other rollers. The same is true with the dish spring 44. Any spring member such as a compression coil spring or any other forms of spring may also be used.

A coupling device (26) is provided in an input end of an engine balancer (20). The coupling device includes a driven gear (25) rotatably supported by a first balancer shaft (23), a disk member (42) supported by an extension (23c) of the first balancer shaft in a rotationally fast and axially slidable manner and a spring member (44) urging the disk toward the driven gear. An arcuate groove (51, 52) including a circumferentially sloped section (51b, 51c, 52b, 52c) is provided on each of the sides of the driven gear and the disk facing each other and a ball (43) is received in a slot defined by the two arcuate grooves. Owing to the interaction between the rolling member and the sloped sections under the axial biasing force of the spring member, a circumferential biasing torque is created between the first and second rotatable members depending on the angular displacement or offset between the two members. By suitably configuring the depth of the groove along the circumferential length thereof, any desired torsional torque profile can be achieved in relation with the angular offset between the first and second rotatable members.

## Claims

1. A coupling device, comprising a housing (21), a first rotatable member (41) rotatably supported by the housing around an axial line of rotation, a second rotatable member (42) rotatably supported by the housing in a coaxial relationship to the first rotatable member and a torsional resilient coupling mechanism interposed between the first and second rotatable members,
wherein the torsional resilient coupling mechanism includes an arcuate groove (51, 52) formed on a side of at least one of the first and second rotatable members facing the other of the first and second rotatable members, the arcuate groove including a sloped section (51a,. 52a) having a bottom surface inclined circumferentially with respect to a plane perpendicular to the axial line of rotation; a rolling member (43) received in the arcuate groove and having a rolling diameter greater than a maximum depth of the arcuate groove; and a spring member (44) urging the first and second rotatable members toward each other,
**characterized in that**:
the coupling device is configured to be provided in an input end of a balancer device (20) including a pair of balancer shafts (23, 24) rotatably supported by a balancer housing (21) and synchronized so as to rotate in opposite direction at a same speed, and
the first rotatable member (41) is configured to comprise a driven gear (25) of the balancer device (20) meshing with a drive gear (15) for transmitting rotation of a crankshaft (11) of an internal combustion engine (1) and rotatably supported by one of the balancer shafts (23), and the second rotatable member is configured to comprise a disk (42) supported
by an extension (23c) of the one balancer shaft (23) in an axially slidable and rotational fast manner.

2. The coupling device according to claim 1, wherein the first rotatable member is rotatably supported by a shaft (23) which is in turn rotatably supported by the housing, and the second rotatable member is supported by an extension (23c) of the shaft in an axially slidable and rotational fast mariner.

3. The coupling device according to claim 2, wherein the spring member is interposed between the second rotatable member and a spring retaining member (40) fixedly attached to the extension of the shaft.

4. The coupling device according to any one of preceding claims, wherein the first and second rotatable members are both provided with the arcuate groove on mutually opposing surfaces thereof, and the rolling member is provided with a rolling diameter (D) greater than a combined maximum depth (H1 + H2) of the arcuate grooves.

5. The coupling device according to claim 1, wherein the groove of the first rotatable member is deeper than that of the second rotatable member at least in parts (51 a, 52a) thereof where the rolling member is located in a neutral point.

6. The coupling device according to claim 1, wherein the groove includes a central flat section (51 a, 52a) and a pair of sloped sections (51 b, 51 c, 52b, 52c) smoothly connected to either circumferential end of the central flat section.

7. The coupling device according to claim 1, wherein the groove includes a central concave section (51 a', 52a') and a pair of sloped sections (51 b, 51 c, 52b, 52c) smoothly connected to either circumferential end of the central concave section, the inclination angle of the concave section progressively increasing from a central part thereof to a point of transition to each adjoining sloped section.

8. The coupling device according to claim 6 or 7, wherein one of the sloped sections of each groove that engages the rolling member when transmitting a driving torque from the first member to the second member is steeper than the other.

9. The coupling device according to any one of claims 6 to 8, wherein the sloped sections of each groove are asymmetric to each other.

## Patentansprüche

1. Kupplungseinrichtung, umfassend ein Gehäuse (21), ein erstes drehbares Element (41), welches durch das Gehäuse um eine axiale Rotationslinie herum drehbar gelagert ist, ein zweites drehbares Element (42), welches durch das Gehäuse in einer koaxialen Beziehung zu dem ersten drehbaren Element drehbar gelagert ist, und einen torsionselastischen Kupplungsmechanismus, welcher zwischen dem ersten und dem zweiten drehbaren Element angeordnet ist,
wobei der torsionselastische Kupplungsmechanismus eine bogenförmige Nut (51, 52) umfasst, welche auf einer Seite von wenigstens einem von dem ersten und dem zweiten drehbaren Element, welche zu dem anderen von dem ersten und dem zweiten drehbaren Element weist, ausgebildet ist, wobei die bogenförmige Nut einen Gefälleabschnitt (51a, 52a) umfasst, welcher eine Bodenfläche hat, welche bezüglich einer Ebene orthogonal zu der axialen Rotationslinie in Umfangsrichtung geneigt ist; ein Rollelement (43) umfasst, welches in der bogenförmige Nut aufgenommen ist und einen Rolldurchmesser hat, welcher größer als eine maximale Tiefe von der bogenförmigen Nut ist; und ein Federelement (44) umfasst, welches das erste und das zweite drehbare Element aufeinander zu drückt, **dadurch gekennzeichnet, dass**:
die Kupplungseinrichtung dazu konfiguriert ist, in einem Eingangsende von einer Ausgleichseinrichtung (20) vorgesehen zu sein, welche ein Paar von Ausgleichswellen (23, 24) umfasst, welche durch ein Ausgleichsgehäuse (21) drehbar gelagert sind und derart synchronisiert sind, dass sie mit derselben Geschwindigkeit in entgegengesetzter Richtung drehen, und
das erste drehbare Element (41) dazu konfiguriert ist, ein Abtriebszahnrad (25) von der Ausgleichseinrichtung (20) zu umfassen,
welches mit einem Antriebszahnrad (15) im Eingriff steht, um eine Drehung von einer Kurbelwelle (11) von einem Verbrennungsmotor (1) zu übertragen, und durch eine von den Ausgleichswellen (23) drehbar gelagert ist, und das zweite drehbare Element dazu konfiguriert ist, eine Scheibe (42) zu umfassen, welche durch eine Verlängerung (23c) von der einen Ausgleichswelle (23) in einer axial verschiebbaren und
drehfesten Weise gelagert ist.

2. Kupplungseinrichtung nach Anspruch 1, wobei das erste drehbare Element durch eine Welle (23) drehbar gelagert ist, welche wiederum durch das Gehäuse drehbar gelagert ist, und das zweite drehbare Element durch eine Verlängerung (23c) von der Welle in einer axial verschiebbaren und drehfesten Weise gelagert ist.

3. Kupplungseinrichtung nach Anspruch 2, wobei das Federelement zwischen dem zweiten drehbaren Element und einem Feder-Halteelement (40) angeordnet ist, welches fest an der Verlängerung von der Welle angebracht ist.

4. Kupplungseinrichtung nach einem der vorhergehenden Ansprüche, wobei sowohl das erste als auch das zweite drehbare Element auf einander gegenüberliegenden Flächen derselben mit der bogenförmigen Nut versehen sind, und das Rollelement mit einem Rolldurchmesser (D) versehen ist, welcher größer als eine kombinierte maximale Tiefe (H1 + H2) von den bogenförmigen Nuten ist.

5. Kupplungseinrichtung nach Anspruch 1, wobei die Nut von dem ersten drehbaren Element wenigstens in Teilen (51a, 52a) davon, wo das Rollelement an einem neutralen Punkt angeordnet ist, tiefer als die von dem zweiten drehbaren Element ist.

6. Kupplungseinrichtung nach Anspruch 1, wobei die Nut einen zentralen flachen Abschnitt (51a, 52a) und ein Paar von Gefälleabschnitten (51 b, 51c, 52b, 52c) umfasst, welche glatt mit jedem Umfangsende von dem zentralen flachen Abschnitt verbunden sind.

7. Kupplungseinrichtung nach Anspruch 1, wobei die Nut einen zentralen konkaven Abschnitt (51a', 52a') und ein Paar von Gefälleabschnitten (51b, 51c, 52b, 52c) umfasst, welche glatt mit jedem Umfangsende von dem zentralen konkaven Abschnitt verbunden sind, wobei der Neigungswinkel von dem konkaven Abschnitt von einem zentralen Teil davon zu einem Übergangspunkt zu jedem angrenzenden Gefälleabschnitt progressiv zunimmt.

8. Kupplungseinrichtung nach Anspruch 6 oder 7, wobei einer von den Gefälleabschnitten von jeder Nut, welcher mit dem Rollelement in Eingriff tritt, wenn ein Antriebsdrehmoment von dem ersten Element zu dem zweiten Element übertragen wird, steiler als der andere ist.

9. Kupplungseinrichtung nach einem der Ansprüche 6 bis 8, wobei die Gefälleabschnitte von jeder Nut asymmetrisch zueinander sind.

## Revendications

1. Dispositif d'accouplement, comprenant un logement (21), un premier élément rotatif (41) supporté à rotation par le logement autour d'une ligne axiale de rotation, un deuxième élément rotatif (42) supporté à rotation par le logement en relation coaxiale avec le premier élément rotatif et un mécanisme de couplage élastique à torsion inséré entre le premier et le second élément rotatif,
dans lequel le mécanisme d'accouplement élastique à torsion comprend une rainure arquée (51, 52) formée sur un côté d'au moins l'un des premier et second éléments rotatifs opposé à l'autre des premier et second éléments rotatifs, la rainure arquée comprenant une section en pente (51 a, 52a) possédant une surface inférieure inclinée circonférentiellement par rapport à un plan perpendiculaire à la ligne axiale de rotation ; un élément roulant (43) disposé dans la rainure arquée et possédant un diamètre de roulement supérieur à une profondeur maximum de la rainure arquée ; et un élément à ressort (44) poussant les premier et second éléments rotatifs l'un vers l'autre,
**caractérisé en ce que** :
le dispositif d'accouplement est configuré pour être établi dans une extrémité d'entrée d'un dispositif d'équilibrage de vilebrequin (20) comprenant une paire d'arbres d'équilibrage de vilebrequin (23, 24), supportés à rotation par un logement d'équilibrage de vilebrequin (21) et synchronisés de manière à tourner en sens opposé à une vitesse identique, et
le premier élément rotatif (41) est configuré pour comprendre une roue menée (25) du dispositif d'équilibrage de vilebrequin (20) s'engrenant avec une roue menante (15) pour la transmission de la rotation d'un vilebrequin (11) d'un moteur à combustion interne (1) et supporté à rotation par l'un des arbres d'équilibrage de vilebrequin (23), et le second élément rotatif est configuré pour comprendre un disque (42) supporté par une extension (23c) de l'un des arbres d'équilibrage de vilebrequin (23) à coulissement axial et à rotation rapide.

2. Dispositif d'accouplement selon la revendication 1, dans lequel le premier élément rotatif est supporté à rotation par un arbre (23) lequel, à son tour, est supporté à rotation par le logement, le second élément rotatif étant supporté par une extension (23c) de l'arbre à coulissement axial et à rotation rapide.

3. Dispositif d'accouplement selon la revendication 2, dans lequel l'élément à ressort est inséré entre le second élément rotatif et un élément de retenue à ressort (40) attaché fixement à l'extension de l'arbre.

4. Dispositif d'accouplement selon l'une quelconque des revendications qui précèdent, dans lequel les premier et second éléments rotatifs sont tous deux dotés de la rainure arquée sur des surfaces mutuellement opposées de celle-ci, l'élément roulant étant doté d'un diamètre de roulement (D) supérieur à une profondeur maximum combinée (H1 + H2) des rainures arquées.

5. Dispositif d'accouplement selon la revendication 1, dans lequel la rainure du premier élément rotatif est plus profonde que celle du second élément rotatif, au moins dans les parties (51 a, 52a) de celui-ci où l'élément roulant est situé en un point neutre.

6. Dispositif d'accouplement selon la revendication 1, dans lequel la rainure comprend une section plate centrale (51 a, 52a) et une paire de sections en pente (51 b, 51 c, 52b, 52c), reliées en douceur à l'une ou l'autre extrémité circonférentielle de la section plate centrale.

7. Dispositif d'accouplement selon la revendication 1, dans lequel la rainure comprend une section concave centrale (51 a', 52a'), et une paire de sections en pente (51 b, 51 c, 52b, 52c), reliées en douceur à l'une ou l'autre extrémité circonférentielle de la section concave centrale, l'angle d'inclinaison de la section concave augmentant progressivement à partir d'une section centrale de celle-ci vers un point de transition de chacune des sections en pente contiguës.

8. Dispositif d'accouplement selon la revendication 6 ou 7, dans lequel l'une des sections en pente de chaque rainure qui engage l'élément roulant lors de la transmission d'un couple d'entraînement du premier élément vers le deuxième élément est plus pentue que l'autre.

9. Dispositif d'accouplement selon l'une quelconque des revendications 6 à 8, dans lequel les sections en pente de chaque rainure sont asymétriques l'une par rapport à l'autre.
